(19) Europäisches Patentamt
European Patent Office
Office européen des brevets

(11) Publication number: **0 417 327 A1**

(12) **EUROPEAN PATENT APPLICATION published in accordance with Art. 158(3) EPC**

(21) Application number: **90905647.5**

(22) Date of filing: **30.03.90**

(86) International application number: **PCT/JP90/00430**

(87) International publication number: **WO 90/11818 (18.10.90 90/24)**

(51) Int. Cl.5: **B01D 59/34**, B01D 59/04

(30) Priority: **30.03.89 JP 76545/89**

(43) Date of publication of application: **20.03.91 Bulletin 91/12**

(84) Designated Contracting States: **BE DE FR GB LU NL**

(71) Applicant: **Nippon Steel Corporation**
**6-3, 2-chome, Ote-machi**
**Chiyoda-ku Tokyo 100(JP)**

Applicant: **NIPPON STEEL CHEMICAL CO. LTD.**
**13-16 Ginza 5-chome Chuo-ku**
**Tokyo 104(JP)**

(72) Inventor: **OHTSUBO, T. R&D Laboratories-I,**
**Nippon Steel Corp.**
**1618, Ida Nakahara-ku Kawasaki-shi**
**Kanagawa-ken 211(JP)**
Inventor: **FUJIOKA, Y. R&D Laboratories-I,**
**Nippon Steel Corp.**
**1618, Ida Nakahara-ku Kawasaki-shi**
**Kanagawa-ken 211(JP)**
Inventor: **CHIBA, K. R&D Laboratories-I,**
**Nippon Steel Corp.**
**1618, Ida Nakahara-ku Kawasaki-shi**
**Kanagawa-ken 211(JP)**
Inventor: **KONO, T. R&D Laboratories-I,**
**Nippon Steel Corp.**
**1618, Ida Nakahara-ku Kawasaki-shi**
**Kanagawa-ken 211(JP)**
Inventor: **MURATA, T. R&D Laboratories-II,**
**Nippon Steel Corp.**
**1618, Ida Nakahara-ku Kawasaki-shi**
**Kanagawa-ken 211(JP)**
Inventor: **HAMADA, N. R&D Laboratories-II,**
**Nippon Steel Corp.**
**10-1, Fuchinobe 5-chome Sagamihara-shi**
**Kanagawa-ken 229(JP)**
Inventor: **YAMASAKI, M. 1908-23,**
**Kitahassaku-cho**
**Midori-kri-ku Yokohama-shi**
**Kanagawa-ken 226(JP)**
Inventor: **HORITA, Yoshiharu**
**56-461, Nakazawa-cho Asahi-ku**
**Yokohama-shi Kanagawa-ken 241(JP)**

(74) Representative: **Holmes, Michael John et al**
**Frank B. Dehn & Co. Imperial House 15-19**
**Kingsway**
**London WC2B 6UZ(GB)**

(54) **ENRICHMENT OF CARBON THIRTEEN.**

(57) A method of enriching $^{13}C$ which comprises exposing a gaseous mixture of a halogenomethane containing at least one fluorine atom and a natural abundance of $^{13}C$ with an oxygen-containing oxidizing agent to a carbon dioxide laser to cause selective dissociation and reaction of a halogenomethane-$C^{13}$ to thereby form $CF_2O$ containing enriched $^{13}C$, hydrolyzing the formed $CF_2O$ to form $CO_2$, and recovering $CO_2$ containing enriched $^{13}C$. This method serves to improve the efficiency of photochemical reaction from an aspect of the laser energy and reduce the production cost of $^{13}C$ compounds. Since the final product of enrichment is in the form of $CO_2$, it

EP 0 417 327 A1

can easily be stored and various labelled compounds can readily be produced therefrom. In addition, it is possible to enrich $^{13}C$ further more highly by the combination of this method with other methods of $^{13}C$ enrichment, particularly cryogenic distillation of CO.

*FIG. 1*

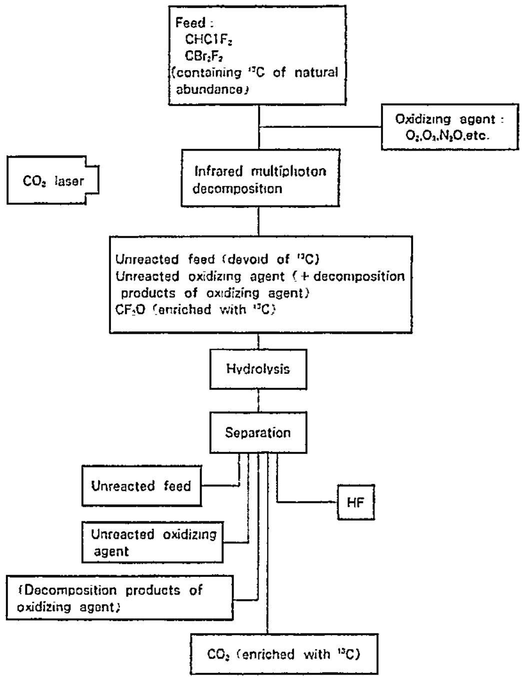

# PROCESS FOR ENRICHIMENT OF CARBON 13

## Field of the Invention

This invention relates to a process for enrichiment of carbon 13 by an infrared laser photochemical reaction (dissociation by multiphoton excitation).

## Background Technology

Naturally-occurring carbon is a mixture of isotopes of mass number 12 and 13, with the former accounting for 98. 9% and the latter 1. 1%. The latter isotope, carbon 13 ($^{13}C$), is enjoying an increasing demand in recent years as tracer in studies of metabolic processes in living bodies.

A variety of processes have been proposed for the enrichment of $^{13}C$: for example, a low-temperature carbon monoxide (CO) distillation process which uses liquefied CO as working substance and utilizes the presence of a slight difference in vapor pressure between the isotopes of CO, a chemical exchange process which utilizes the exchange reaction of hydrogen cyanide with a cyanide ion or that of carbon dioxide with carbamic acid, a laser process which utilizes the isotope effect in the photochemical reaction of Freon compounds, a thermal diffusion process which utilizes a slight difference between isotopes in the diffusion rate of gaseous methane from a low temperature side to a high temperature side, and other processes based on adsorption, gas diffusion, centrifugation, and mass diffusion.

Any of these processes, however, has its merits and demerits and it is only the low-temperature CO distillation process that is practiced today on a commercial scale for the enrichment of $^{13}C$.

This process is described, for example, in an article in SEPARATION SCIENCE AND TECHNOLOGY, 15(3), pp. 491-508 (1980). According to this article, the process will encounter the following problems particularly in the enrichment of $^{13}C$ from the natural abundance of approximately 1. 1% to a concentration in excess of 90%: ① the distillation for separation here requires an exceptionally large number of plates as it concerns components of exceedingly low relative volatility and, in consequence, it needs large-size equipment and consumes an enormous quantity of energy; ② carbon monoxide, a poison gas, is used in large quantities; and ③ the enrichment of $^{13}C^{16}O$ is accompanied by that of $^{12}C^{18}O$ on account of the two being close to each other in vapor pressure and this presents difficulties to an enrichment of $^{13}CO$ in excess of 90% or so.

The chemical exchange process is described, for example, in Japan Tokkyo Kokai Koho No. 61-61,621 (1986). The process has an advantage of relatively low energy consumption, but its low exchange rate necessitates the use of organic solvents in large volumes and the installation of large-size equipment for the enrichment of $^{13}C$ to a high level.

The laser process uses a mixture of a halogenated hydrocarbon such as a fluorohalogenomethane, a halogen, and a hydrogen halide as feed gas, irradiates the mixture with a carbon dioxide laser beam having a wavelength in the infrared range to induce selectively a photochemical reaction of either a $^{13}C$ compound or a carbon 12 ($^{12}C$) compound, and separates the reaction product of one compound from the unreacted other compound to concentrate the $^{13}C$ compound. [Reference should be made, for instance, to Japan Tokkyo Kokai Koho Nos. 60-132,629 (1985), 58-183,932 (1983), and 63-97,217 (1988) and U. S. Patent No. 4,406,763, No. 4, 313,807, and No. 4,212,717.] This process has an advantage of effective utilization of energy where its working substance has a low concentration of $^{13}C$ as a carbon dioxide laser beam is able to hit $^{13}C$-containing molecules at a relatively high probability to induce a photochemical reaction. The process, however, presents a problem that the $^{13}C$-enriched compounds contain a halogen and they cannnot be used as they are for labelled compounds or raw materials therefor.

The thermal diffusion process and others such as adsorption, gas diffusion, centrifugation, and mass diffusion have a variety of problems: some are suited for treatment of an extremely small quantity but not for a large quantity while others require complex equipment and incur higher cost for the enrichment of $^{13}C$.

The present inventors have conducted extensive studies to solve the problems in the prior art technologies for the enrichment of $^{13}C$, found that the irradiation with a laser beam in the copresence of a halogenomethane containing one or more fluorine atoms and an oxygen-containing oxidizing agent such as $O_2$ and $O_3$ in the aforesaid laser process produces $^{13}C$-enriched $CF_2O$ which is readily convertible to $CO_2$, and completed this invention.

Accordingly, it is an object of this invention to provide a process for enrichiment of carbon 13 which comprises mixing a halogenomethane containing one or more fluorine atom and carbon 13 of natural

abundance with an oxygen-containing oxidizing agent, irradiating the resulting feed gas mixture with a carbon dioxide laser beam to induce preferential dissociation of said halogenomethane containing carbon 13, taking out the carbon 13-enriched product from the reaction mixture, and converting said carbon 13-enriched product to carbon dioxide.

Another object of this invention is to provide a process for enrichiment of carbon 13 which comprises using $CHClF_2$ or $CBr_2F_2$ as halogenomethane, mixing said halogenomethane with an oxygen-containing oxidizing agent, irradiating the resulting feed gas mixture with a carbon dioxide laser beam to produce $^{13}C$-enriched $CF_2O$ by the selective reaction of $^{13}C$-containing $CHClF_2$ or $CBr_2F_2$, converting said $^{13}C$-enriched $CF_2O$ to $CO_2$, and taking out $^{13}C$-enriched $CO_2$.

## Disclosure of the Invention

This invention thus basically relates to a process for enrichiment of carbon 13 which comprises mixing a halogenomethane capable of producing a radical or carbene represented by $CF_3$, $CF_2X$, CFX, or $CFX_2$ - (wherein X is a halogen, any one of Cl, Br, and I) upon irradiation with an infrared laser beam and containing one or more fluorine atoms and $^{13}C$ of natural abundance with an oxygen-containing oxidizing agent, irradiating the resulting feed gas mixture with a carbon dioxide laser beam to cause said halogenomethane containing C 13 to react preferentially, taking out $^{13}C$-enriched $CF_2O$ from the reaction mixture, and converting said $CF_2O$ to carbon dioxide.

The halogenomethanes containing one or more fluorine atoms to be used in this invention are represented by the general formula CHa Fb Xc (wherein X is Cl, Br, or I, a is an integer from 0 to 3, b is an integer from 1 to 3, and c is an integer from 0 to 3, and X may be identical or different when c is 2 or 3) and include $CHClF_2$, $CBr_2F_2$, $CBrClF_2$, $CBrF_3$, $CClF_3$, and $CF_3I$. Of these compounds, $CHClF_2$ and $CBr_2F_2$ are preferable. Said halogenomethanes containing one or more fluorine atoms are used for the reasons that naturally-occurring fluorine has no isotopes, namely it is 100% fluorine 19 ($^{19}F$), and clearly shows an isotope effect and that a fluorocarbon containing a halogen (X) and hydrogen (H) readily gives off X or H to form a compound such as $X_2$ and HX.

The gas to be added to said halogenomethane in this invention is an oxygen-containing oxidizing agent and it is a gas or a vapor having a specified vapor pressure under the conditions of laser beam irradiation. The additive gas reacts with a radical or carbene arising from the laser beam-induced dissociation of a halogenomethane to form a compound different from the unreacted ones, thus making it possible to separate the reaction product, and it also prevents the dimerization of the halogenomethane. The additive gas may contain an inert gas such as argon.

The oxygen-containing oxidizing agents to be used in this invention include oygen ($O_2$), ozone ($O_3$), and a variety of compounds capable of effecting oxidation such as nitrogen oxides and sulfur oxides, oxygen and ozone being preferable. With an oxygen-containing oxidizing agent as additive gas, the reaction produces $CF_2O$ as the $^{13}C$-enriched product. Since $CF_2O$ does not show an absorption peak in the range from 1,000 to 1, 200 $cm^{-1}$, a laser beam with its wavelength in this range is utilized effectively to dissociate the feed gas, resulting in more effective utilization of the laser beam. Another advantage is that $CF_2O$ may be used as raw material for labelled compounds as it readily reacts with water ($H_2O$) to yield $^{13}C$-enriched carbon dioxide ($CO_2$) and furthermorer, this $CO_2$ can readily be changed to a carbonate for stable and safe storage.

The process of this invention for enrichiment of $^{13}C$ by the laser photochemical reaction will be explained in detail below.

Figure 1 is a schematic flow chart to show the principle of the process of this invention for enrichiment of $^{13}C$. A halogenomethane containing one or more fluorine atoms, particularly $CHClF_2$ or $CBr_2F_2$, is mixed with an oxygen-containing oxidizing agent such as oxygen ($O_2$), ozone ($O_3$), and dinitrogen oxide ($N_2O$) and the resulting feed gas mixture is irradiated with a carbon dioxide laser beam to induce an infrared multiphoton decomposition reaction. In this reaction, the unreacted feed becomes devoid of $^{13}C$, the oxygen-containing oxidizing agent partly decomposes to leave the decomposition product behind, and the $C^{13}$-containing halogenomethane reacts preferentially to produce $^{1\ 3}C$-enriched $CF_2O$. This $CF_2O$ is converted to $CO_2$ by hydrolysis and is then separated from the unreacted feed, the unreacted oxidizing agent, the decomposition product of the oxidizing agent, or hydrogen fluoride (HF) for the recovery of $^{13}C$-enriched $CO_2$.

The infrared multiphoton decomposition reaction of the aforesaid halogenomethane will be explained with reference to the case where $CHClF_2$ is used as halogenomethane and oxygen ($O_2$) as oxygen-containing oxidizing agent.

Chlorodifluoromethane ($CHClF_2$) shows an absorption band assignable to the stretching vibration of the $^{12}C$-F bond near a wave number of 1,100 $cm^{-1}$ and another assignable to the stretching vibration of the $^{13}C$-F bond at a wave number smaller by approximately 30 $cm^{-1}$ or at a longer wavelength than the foregoing. When $CHClF_2$ at several torrs to several hundred torrs is irradiated by a laser beam, for example, by a carbon dioxide laser beam with its wavelength in the infrared range of 1,020 to 1,080 $cm^{-1}$ at a fluence of 0.1 to 10 J/cm², $CHClF_2$ containing $^{13}C$ selectively undergoes infrared multiphoton dissociation to generate $CF_2$ carbene according to the following equation (1):

$$CHClF_2 + nh\nu \rightarrow CF_2 + HCl \qquad (1)$$

A pulsed laser beam from a transversely excited atmospheric (TEA) carbon dioxide laser or from a Q-switched continuous-wave carbon dioxide laser is effective for the reaction such as mentioned above.

The feed $CHClF_2$, if mixed with $O_2$ in advance, produces $CF_2O$. The reaction mechanism is not clear yet, but it is likely that the reaction proceeds according to the following equation (2) or equations (3) and (4) to produce $^{13}C$-enriched $CF^2O$:

$$CF_2 + O_2 \rightarrow CF_2O + O \qquad (2)$$

$$3\ O_2 \rightarrow 2\ O_3 \qquad (3)$$

$$CF_2 + O_3 \rightarrow CF_2O + O_2 \qquad (4)$$

The $CF_2O$ thus formed is readily hydrolyzed into carbon dioxide ($CO_2$) and hydrogen fluoride (HF) according to the following equation (5):

$$CF_2O + H_2O \rightarrow CO_2 + 2\ HF \qquad (5)$$

Alkaline hydrolysis by an aqueous solution of barium hydroxide or calcium hydroxide enables recovery of the $CO_2$ as barium carbonate or calcium carbonate as shown, for example, by the following equation (6):

$$CF_2O + 2\ Ba(OH)_2 \rightarrow BaCO_3 + BaF_2 + 2\ H_2O \qquad (6)$$

The reaction can proceed in the absence of water as shown by the above equation (6).

The carbonate thus obtained is decomposed stoichiometrically to $CO_2$ by addition of an acid such as hydrochloric acid and is recovered as $CO_2$.

When $CBr_2F_2$ is used as feed halogenomethane, the irradiation with a carbon dioxide laser beam in the copresence of oxygen produces $^{13}C$-enriched $CF_2O$ according to the following equation (7) and the $CF_2O$ is likewise readily hydrolyzed into carbon dioxide and hydrogen fluoride:

$$CBr_2F_2 + O_2 + nh\nu \rightarrow CF_2O + Br_2 + O \qquad (7)$$

In the process of this invention, a halogen and/or a halogen halide may be made to be present together with the aforesaid oxygen-containing oxidizing agent in the reaction system where $CHClF_2$ is used as halcgenomethane containing one or more fluorine atoms and carbon 13 of natural abundance. In the additional presence of a halogen and/or a hydrogen halide, a radical or carbene produced by the laser beam irradiation reacts with the halogen or the hydrogen halide and the reaction product, under ongoing laser beam irradiation, dissociates and reacts with oxygen to form $CF_2O$, which is readily hydrolyzed into

carbon dioxide and hydrogen fluoride as mentioned above. In this case, the dissociation reaction and the enrichment of $^{13}C$ respectively occur twice in the same system, thus contributing to enhance still further the degree of enrichment of $^{13}C$.

The additional presence of a halogen and/or a hydrogen halide in the reaction system will be explained with reference to the case where $O_2$ is used as oxygen-containing oxidizing agent and $Br_2$ as halogen. Upon irradiation with a carbon dioxide laser beam, the reaction of the following equation (8) occurs after the reaction of the above-mentioned equation (1) to produce $CBr_2F_2$, which in turn undergoes the reaction of the above-mentioned equation (7) to produce $CF_2O$:

$$CF_2 + Br_2 \rightarrow CBr_2F_2 \qquad (8)$$

The $^{13}C$-enriched $CO_2$ thus obtained by the laser process may, if necessary, be concentrated still further by other processes for enrichment of $^{13}C$. Processes useful for this purpose are, for example, low-temperature CO distillation, chemical exchange, thermal diffusion, adsorption, gas diffusion, centrifugation, and mass diffusion. Of these, the low-temperature CO distillation process is preferable for the following reasons. The process in question can enrich $^{13}C$ to a high level on a smaller scale at lower energy requirement than other processes in the cases where somewhat $^{13}C$-enriched CO is used as feed. In addition, the aforesaid laser process yields $CO_2$ as the product of $^{13}C$ enrichment and the $CO_2$ can readily be converted to the working substance, namely CO, for the low-temperature CO distillation process.

In the further enrichment of the $^{13}C$-enriched $CO_2$ obtained by the aforesaid laser process by the low-temperature CO distillation process, the $CO_2$ in question is converted to CO by a known reduction reaction with the use of a metal as reducing agent. The product CO is separated from the unreacted $CO_2$ at a low temperature at which CO does not condense and is forwarded to the following low-temperature CO distillation step.

The low-temperature CO distillation here can be carried out, for example, according to a procedure similar to the one in the previously quoted article in SEPARATION SCIENCE AND TECHNOLOGY. An example is given below.

The distillation system may be batch, but it is advantageous to adopt a continuous system containing a rectification column of a suitable diameter installed in a superinsulation cold box and filled with irregular packings such as Dixon ring and Heli packing. An inlet for the feed is provided in the column in such a manner as to give an adequate number of plate both in the enrichment section below and in the recovery section above, the carbon monoxide enriched with $^{13}C$ to a specified level by the laser process is supplied at a given rate to the column at ambient pressure and liquid nitrogen temperature under the conditions of a column top temperature of -191 °C, a column bottom temperature of -190 °C, and reflux at the column top, and carbon monoxide with a high concentration of $^{13}C$ is taken out from the enrichment section and carbon monoxide with a low concentration of $^{13}C$ is withdrawn from the recovery section. The latter carbon monoxide still contains $^{13}C$ in a concentration higher than the natural abundance; hence it can be used as it is in applications tolerating low concentrations such as agriculture or it can be methanated and then treated with fluorine or with fluorine and other halogens or hydrogen halides to prepare halogenomethanes for reuse.

An apparatus for practicing the process of this invention is equipped with a carbon dioxide laser and a focusing lens which focuses a laser beam from the laser to obtain a desired fluence. For example, a basic structure is illustrated in Fig. 2. The focusing lens 3 placed between the laser 1 and the reactor 2 focuses the laser beam 4 in the photoreaction zone 5 inside the reactor 2 to obtain a desired fluence.

Fig. 3 illustrates an apparatus designed for a continuous laser reaction. The reactor 2 is provided with the inlet 6 and the outlet 7 that is connected to the separator 8. The feed gas 9 continuously introduced through the inlet 6 reacts under irradiation with a laser beam while residing in the reactor 2 and the reaction product 10 is continuously withdrawn from the outlet 7 and separated from the unreacted compounds in the separator 8.

Fig. 4 illustrates an apparatus in which a plurality of lasers, 1a and 1b, are provided for the reactor 2. The laser beams 4a and 4b generated by the lasers respectively pass through the focusing lenses 3a and 3b and are crossed in the photoreaction zone 5 inside the reactor 2 for overlapping in respect to time and space whereby the crossing angle of the laser beams is controlled within 30 ° and the time lag between the laser pulses within 100 nanoseconds. It is possible, in this manner, to enhance the enrichiment of efficiency of the isotope per unit amount of laser beam. The device 11 in the figure is a trigger signal generator for controlling the time lag between laser pulses within 100 nonaseconds.

Fig. 5 illustrates an apparatus which is designed for effective utilization of the laser beam without

attenuation by inclining the window 12 of the reactor 2 at a given angle $\theta$ around an axis perpendicular to the linear polarization plane 13 and controlling the angle $\theta$ in such a manner as to obtain

$n = \tan \alpha$ (n is the refractive index of the window at the wave length of the laser beam) and

$\alpha - 5^\circ \leqq \theta \leqq \alpha + 5^\circ$.

Fig. 6 illustrates an apparatus in which the light reflector 14 provided in the rear of the photoreaction zone 5 inside the reactor 2 reflects back such part of the incident laser beam 4a as passing through the focusing lens 3 and the reactor 2 without participating in the reaction in the photoreaction zone 5 and focuses the reflected laser beam 4b in the photoreaction zone 5 for further utilization in the reaction. It is desirable here to control the deviation $\Delta$ of the focal point of the incident laser beam 4a from that of the reflected laser beam 4b and the focal length f of the focusing lens 3 in such a manner as to obtain the relationship $-f/4 \leqq \Delta \leqq f/4$. The light reflector 14 may be composed of the rear window in the form of a concave mirror or it may be composed of a concave mirror and a convex lens and may be placed outside the reactor 2.

Fig. 7 illustrates an apparatus which is designed for effective utilization of the laser beam 4 passing without participating in the photoreaction by an array of the first photoreaction system (2a, 3a) consisting of a reactor 2a and a focusing lens 3a for focusing a laser beam, the second photoreaction system (2b, 3b) consisting of a reactor 2b and a focusing lens 3b placed in the rear of the first, and the third photoreaction system (2c, 3b) consisting of a reactor 2c and a focusing lens 3b placed in the rear of the second. There is no specific limitation to the number of photoreaction systems to be provided and it is recommended to set the focal lengths $f_a$, $f_b$, $f_c$,... ... of the focusing lenses 3a, 3b, 3c, ... ... as $f_a > f_b > f_c > \cdots$. The reactor may be composed of independent units as illustrated in Fig. 7 or it may be one long unit compartmentalized into photoreaction zones by a plurality of focusing lenses arranged inside the reactor.

Fig. 8 illustrates an apparatus which is designed for effective utilization of the laser beam 4 entering the reactor 2 by constructing the reactor 2 roughly in the shape of the space through which the laser beam passes after the focusing lens 3.

## Brief Description of the Drawings

Fig. 1 is a schematic flow chart illustrating the principle of the process of this invention for enrichiment of $^{13}C$.

Fig. 2 illustrates a laser beam from a laser being focused by a lens to obtain a desired fluence in the laser reaction.

Fig. 3 illustrates a reactor for the laser reaction designed for continuous supply of the feed gas and continuous withdrawal of the reaction mixture.

Fig. 4 illustrates laser beams generated by a plurality of lasers being focused by lenses and overlapped inside the reactor in respect to time and space.

Fig. 5 illustrates a reactor for the laser reaction with the window inclined around an axis perpendicular to the linear polarized plane.

Fig. 6 illustrates a reactor for the laser reaction with a light reflector provided in the rear end of the photoreaction zone in the course of the laser beam,

Fig. 7 illustrates a reactor for the laser reaction containing a plurality of photoreaction systems arranged in series, each consisting of an optical system for focusing a laser beam and a photoreaction system,

Fig. 8 illustrates a reactor for the laser reaction formed roughly in the shape of the space through which the laser beam passes after the optical system,

Fig. 9 is a graph showing the relationship between the mininum number of theoretical plate and the achieved concentrations of $^{13}C^{16}O$ and $^{12}C^{18}O$ in low-temperature CO distillation.

## Detailed Description of the Preferred Embodiments

This invention will be explained in detail with reference to the accompanying examples.

## Example 1

The enrichment of $^{13}C$ was carried out in a reactor constructed as illustrated in Fig. 2 according to the following flow chart.

Feed gas mixture: $CHClF_2$ containing $^{13}C$ of natural abundance,
100 torrs and $O_2$ as oxidizing agent, 10 torrs

↓

Irradiation with carbon dioxide laser
[9P(28); wave number 1039.37 $cm^{-1}$]: formation of $CF_2O$

↓

Hydrolysis: formation of $CO_2$

↓

Analysis: gas chromatography/mass spectrometry

The reactor was a quartz glass tube, 3 cm in inside diameter and 2 m long, fitted with infrared optical windows made of NaCl at both ends. A carbon dioxide laser beam of a wave number of 1, 039. 37 cm $^{-1}$ at an output of 8 J/pulse and 1 Hz was focused by a $BaF_2$ lens of a focal length of 2 m and used for the irradiation in the reactor with the fluence at the focal point set at approximately 8 J/cm$^2$. The final analysis of $CO_2$ yielded the following results.

$^{12}CO_2$ (m/z = 44, relative ion intensity 282)
$^{13}CO_2$ (m/z = 45, relative ion intensity 1000)
$^{13}C/(^{12}C + ^{13}C) = 0.7800$
Production of $^{13}C$/pulse: 3.0 X 10 $^{-7}$ mol/pulse

Example 2

The enrichment of $^{13}C$ was carried out according to the following flow chart.

Feed gas mixture: $CBr_2F_2$ containing $^{13}C$ of natural abundance,
50 torrs and $O_2$ as oxidizing agent, 50 torrs

↓

Irradiation with carbon dioxide laser
[9P(28); wave number 1039.37 $cm^{-1}$]: formation of $CF_2O$

↓

Hydrolysis: formation of $CO_2$

↓

Analysis: gas chromatography/mass spectrometry

The reactor was a quartz glass tube, 3 cm in inside diameter and 3 m in length, fitted with infrared optical windows made of NaCl at both ends. A carbon dioxide laser beam of a wave number of 1,039.37 cm$^{-1}$ at an output of 7 J/pulse and 1 Hz was focused by a $BaF_2$ focusing lens of a focal length of 3 m and used for the irradiation in the reactor with the fluence around the focal point set at approximately 5.5 J/cm$^2$.

The final analysis of $CO_2$ yielded the following results.

$^{12}CO_2$ (m/z = 44, relative ion intensity 582)
$^{13}CO_2$ (m/z = 45, relative ion intensity 1000)
$^{13}C/(^{12}C + ^{13}C)$ - 0.6321
Production of $^{13}C$/pulse: 1.17 X 10 $^{-6}$ mol/pulse

Example 3

The enrichment of $^{13}C$ was carried out according to the following flow chart.

Feed gas mixture: $CHClF_2$ containing $^{13}C$ of natural abundance,
70 torrs and $O_2+O_3$ as oxidizing agent, 30 torrs

↓

Irradiation with carbon dioxide laser
[9P(22); wave number 1045.02 $cm^{-1}$]: formation of $CF_2O$

↓

Hydrolysis: formation of $CO_2$

↓

Analysis: gas chromatography/mass spectrometry

The reactor was a quartz glass tube, 3 cm in inside diameter and 2 m in length, fitted with infrared optical windows made of NaCl at both ends. A carbon dioxide laser beam of a wave number of 1,045.02 $cm^{-1}$ at an output of 8 J/pulse and 1 Hz was focused by a $BaF_2$ lens of a focal length of 2 m and used for the irratiation in the reactor with the fluence around the focal point set at 8 J/$cm^2$. The final analysis of $CO_2$ yielded the following results.

$^{12}CO_2$ (m/z = 44, relative ion intensity 1000)
$^{13}CO_2$ (m/z = 45, relative ion intensity 810)
$^{13}C/(^{12}C + ^{13}C)$ - 0.4475
Production of $^{13}C$/pulse: 7.2 X 10 $^{-7}$ mol/pulse

Example 4

The enrichment of $^{13}C$ was carried out according to the following flow chart.

Feed gas mixture: $CHClF_2$ containing $^{13}C$ of natural abundance, 10 torrs and $O_2$ as oxidizing agent, 5 torrs

↓

Irradiation with carbon dioxide laser [9P(29); wave number 1046.85 $cm^{-1}$]: formation of $CF_2O$

↓

Hydrolysis: formation of $CO_2$

↓

Analysis: gas chromatography/mass spectrometry

The reactor was a quartz glass tube, 3 cm in inside diameter and 20 cm in length, fitted with infrared optical windows made of NaCl at both ends. A laser beam from a Q-switched continuous-wave carbon dioxide laser at 37 mJ/pulse and 12 Hz was focused by a ZnSe lens, coated for reduced reflection, of a focal length of 10 cm and used for the irradiation. The final analysis of $CO_2$ yielded the following results.

$^{12}CO_2$ (m/z = 44, relative ion intensity 724)
$^{13}CO_2$ (m/z = 45, relative ion intensity 1000)
$^{13}C/(^{12}C + ^{13}C) = 0.4200$
Production of $^{13}C$/hr.: $7.2 \times 10^{-3}$ mol/hr.

Example 5: Experiment in combination with low-temperature CO distillation

The feed was irradiated with a laser beam of a wave number of 1,020 to 1,080 $cm^{-1}$ from a TEA carbon dioxide laser with a built-in diffraction grating in such a manner as to cause 1/10 to 3/4 of $^{13}C$ in the feed to react. The feed remaining unreacted after the irradiation was separated by such means as distillation, low-temperature condensation, and adsorption and the reaction product was reduced by contacting it with metallic zinc at 400 to 500 °C.

Several specimens enriched with $^{13}C$ to different levels were prepared by changing the conditions of the irradiation by a carbon dioxide laser beam and distilled in a model low-temperature distillation column to determine the relationship between the minimum number of theoretical plate (n) and the achieved concentrations of $^{13}C^{16}O$ and $^{12}C^{18}O$. The results are shown in Fig. 9.

The relationship between the $^{13}C$ concentration of introduced CO and the number of theoretical plate (minimum number of theoretical plate) under total reflux or the required number of plate in continuous distillation with the withdrawal of the product taken into account is shown in Table 1 for the enrichment of $^{13}C$ to 99%.

It is indicated that the concentration of $^{12}C^{18}O$ always becomes 0.6% or less as long as the concentration of $^{13}C$ is 10% or more and $^{13}CO$ with a $^{13}C$ concentration of 99% or more can be obtained without the isotope exchange reaction by setting the number of plate equal to or greater than the required number of plate shown in Table 1.

| $^{13}C$ Concentration of introduced CO (%) | Minimum number of theoretical plate | Required number of plate |
|---|---|---|
| 1.1 | Not achieving 99% | → |
| 10 | 980 | 2,560 |
| 20 | 860 | 2,070 |
| 30 | 790 | 1,900 |
| 40 | 720 | 1,690 |
| 50 | 660 | 1,460 |
| 60 | 610 | 1,330 |

Moreover, the relationship between the energy requirement for obtaining enriched CO with a $^{13}C$ concentration of 99% and the $^{13}C$ concentration of introduced CO is shown in Table 2. The energy required when CO with a $^{13}C$ concentration of 10% is introduced is taken as 100 in the table.

Table 2

| $^{13}C$ Concentration of introduced CO (%) | Energy requirement | | |
|---|---|---|---|
| | Laser irradiation | Low-temperature distillation | Total |
| Control (1.1%) | 0 | 118 | 118 |
| 10 | 5 | 95 | 100 |
| 20 | 11 | 74 | 85 |
| 30 | 19 | 54 | 73 |

| | | | |
|---|---|---|---|
| 40 | 28 | 41 | 69 |
| 50 | 38 | 29 | 67 |
| 60 | 51 | 18 | 69 |
| 70 | 66 | 11 | 77 |
| 80 | 84 | 7 | 91 |
| 90 | 107 | 3 | 110 |
| Control (99%) | 137 | 0 | 137 |

Example 6

The enrichment of $^{13}C$ was carried out according to the following flow chart.

Feed gas mixture: $CHClF_2 + O_2$ (ratio 3:1, and operating pressure 100 torrs)

↓

Irradiation with carbon dioxide laser: formation of $CF_2O$

↓

Hydrolysis: formation of $CO_2$

↓

Separation: recovery of $CO_2$

↓

Reduction: formation of CO

↓

Low-temperature CO distillation: recovery of product $^{13}CO$ highly enriched with $^{13}C$

An apparatus of the design illustrated in Fig. 1 was used for the laser reaction. The reactor is a quartz glass tube, 3 cm in inside diameter and 2.0 m in length, fitted with infrared optical windows made of NaCl at both ends. A carbon dioxide laser beam of a wave number of 1,045.02 cm $^{-1}$ at an output of 8 J/pulse was focused with a $BaF_2$ lens of a focal length of 1.5 m and used for the irradiation.

The product $CF_2O$ from the aforesaid laser reaction was converted to $CO_2$ by hydrolysis and recovered. The $^{13}C$ abundance was determined by a mass spectrometer from the ratio of $^{12}C^{16}O_2$ (m/z = 44) and $^{13}C^{16}O_2$ (m/z = 45) while the amount of $CO_2$ formed (the extent of the laser-induced reaction) was

determined by gas chromatography from the ratio of the $CO_2$ formed after the hydrolysis and the unreacted $CHClF_2$.

The laser reaction was found to yield $CO_2$ with a $^{13}C$ abundance of 30% at a rate of 3. 0 X 10 $^{-7}$ mol/pulse. The $CO_2$ obtained by the laser process was reduced to CO by contact with metallic zinc at approximately 400 °C.

The low-temperature CO distillation was simulated in the following manner. A continuous rectification system was set up by placing a rectification column with a diameter of 30 mm filled with irregular Dixon rings as packing materials in a superinsulation cold box while setting the number of plate at 1,450 in the concentration section and at 450 in the recovery section. The aforesaid CO with the $^{13}C$ abundance of 30% obtained in the laser enrichment step was fed at a rate of 0.344 mol/hr. to the column at ambient pressure and liquid nitrogen temperature under the conditions of a column top temperature of -191 °C, a column bottom temperature of -190 °C, and reflux at the column top and CO with a $^{13}C$ concentration of 99% was taken out from the concentration section at a rate of 0.083 mol/hr. and CO with a $^{13}C$ concentration of 7. 8% was taken out from the recovery section at a rate of 0.261 mol/hr.

The elctric power requirement per 1 g. of $^{13}CO$ with a $^{13}C$ concentration of 99% was 24 KWh in the laser enrichment step, 3 KWh in the hydrolysis and reduction sections, and 76 KWh in the low-temperature CO distillation step for a total of 103 KWh.

Example 7

The enrichment of $^{13}C$ was carried out according to the following flow chart.

Feed gas mixture: $CBr_2F_2$ + $O_2$ (ratio 1:1, and operating pressure 100 torrs)

↓

Irradiation with carbon dioxide laser: formation of $CF_2O$

↓

Hydrolysis: formation of $CO_2$

↓

Separation: recovery of $CO_2$

↓

Reduction: formation of CO

↓

Low-temperature CO distillation: recovery of product $^{13}CO$ highly enriched with $^{13}C$

An apparatus of the design illustrated in Fig. 2 was used for the laser reaction. The reactor is a quartz glass tube, 3 cm in inside diameter and 3.0 m in length, fitted with infrared optical windows made of NaCl at both ends. A carbon dioxide laser beam of a wave number of 1,039.37 cm $^{-1}$ at an output of 7 J/pulse was focused by a $BaF_2$ lens of a focal length of 3.0 m and used for the irradiation.

The product $CF_2O$ formed in the laser reaction was converted to $CO_2$ by hydrolysis and recovered. The isotope abundance of $^{13}C$ and the amount of $CO_2$ formed were determined as in Example 4.

The laser reaction was found to yield $CO_2$ with a $^{13}C$ abundance of 63% at a rate of 1.2 X $10^{-7}$ mol/pulse. It was confirmed, as in Example 4 above, that the $CO_2$ obtained by the laser process can be reduced to CO by contact with metallic zinc at approximately 400 °C and then distilled at low temperature to give $^{13}CO$ with a high concentration of $^{1\ 3}C$ in high yields.

## Industrial Applicability

The process of this invention for enrichiment of carbon 13 yields carbon dioxide enriched with carbon 13 by the infrared laser photochemical reaction of a halogenomethane containing one or more fluorine atoms and carbon 13 of natural abundance and an oxygen-containing oxidizing agent under irradiation with a carbon dioxide laser beam while enabling efficient utilization of the power of a laser beam, namely the costliest item, improving the efficiency of laser energy in the photochemical reaction, and reducing the production cost of carbon 13 compounds.

Moreover, the process furnishes the final product in the form of carbon dioxide, which is easy to store and useful for the preparation of a variety of label led compounds, and it can readily be combined with other processes for enrichiment of carbon 13, particularly with the low-temperature CO distillation process, for further enrichment of carbon 13.

## Claims

1. A process for enrichiment of carbon 13 which comprises mixing a halogenomethane containing one or more fluorine atoms and carbon 13 of natural abundance with an oxygen-containing oxidizing agent, irradiating the resulting feed gas mixture with a carbon dioxide laser beam to produce $CF_2O$ enriched with carbon 13, hydrolyzing said $CF_2O$ to form $CO_2$, and taking out $CO_2$ enriched with carbon 13.

2. A process for enrichiment of carbon 13 according to claim 1 wherein said halogenomethane is $CHClF_2$ or $CBr_2F_2$.

3. A process for enrichiment of carbon 13 according to calim 1 wherein said oxygen-containing oxidizing agent is gaseous oxygen or gaseous ozone.

4. A process for enrichiment of carbon 13 according to claim 1 wherein the concentration of carbon 13 in the product enriched by the laser reaction is 10 to 90%.

5. A process for enrichiment of carbon 13 according to claim 1 wherein said feed gas mixture is continuously supplied to a reactor for the laser reaction and the reaction mixture is continuously taken out of the reactor.

6. A process for enrichiment of carbon 13 which comprises mixing a halogenomethane containing one or more fluorine atoms and carbon 13 of natural abundance with an oxygen-containing oxidizing agent, irradiating the resulting feed gas mixture with a carbon dioxide laser beam to produce $CF_2O$ enriched with carbon 13, hydrolyzing said $CF_2O$ to form $CO_2$, taking out $CO_2$ enriched with carbon 13, reducing said $CO_2$ to CO enriched with carbon 13, and submitting said CO enriched with carbon 13 to low-temperature distillation.

7. A process for enrichiment of carbon 13 according to claim 6 wherein said halogenomethane is $CHClF_2$ or $CBr_2F_2$.

8. A process for enrichiment of carbon 13 according to claim 6 wherein said oxygen-containing oxidizing agent is gaseous oxygen or gaseous ozone.

9. A process for enrichiment of carbon 13 according to claim 6 wherein the concentration of carbon 13 in the product enriched by the laser reaction is 10 to 90%.

10. A process for enrichiment of carbon 13 according to claim 6 wherein said feed gas mixture is continuously supplied to a reactor for the laser reaction and the reaction mixture is continuously taken

out of the reactor.

Amended Claims in accordance with Rule 86(2) EPC.

**1.** (after amendment) A process for enrichment of carbon 13 which comprises mixing $CHClF_2$ or $CBr_2F_2$ with an oxygen-containing oxidizing agent, irradiating the resulting feed gas mixture with a carbon dioxide laser beam to produce $CF_2O$ enriched with carbon 13, hydrolyzing said $CF_2O$ to form $CO_2$, and taking out $CO_2$ enriched with carbon 13.

**2.** (deletion)

**3.** A process for enrichment of carbon 13 according to calim 1 wherein said oxygen-containing oxidizing agent is gaseous oxygen or gaseous ozone.

**4.** A process for enrichment of carbon 13 according to claim 1 wherein the concentration of carbon 13 in the product enriched by the laser reaction is 10 to 90%.

**5.** A process for enrichment of carbon 13 according to claim 1 wherein said feed gas mixture is continuously supplied to a reactor for the laser reaction and the reaction mixture is continuously taken out of the reactor.

**6.** (after amendment) A process for enrichment of carbon 13 which comprises mixing $CHClF_2$ or $C8r_2F_2$ with an oxygen-containing oxidizing agent, irradiating the resulting feed gas mixture with a carbon dioxide laser beam to produce $CF_2O$ enriched with carbon 13, hydrolyzing said $CF_2O$ to form $CO_2$, taking out $CO_2$ enriched with carbon 13, reducing said $CO_2$ to CO enriched with carbon 13, and submitting said CO enriched with carbon 13 to low-temperature distillation.

**7.** (deletion)

**8.** A process for enrichment of carbon 13 according to claim 6 wherein said oxygen-containing oxidizing agent is gaseous oxygen or gaseous ozone.

**9.** A process for enrichment of carbon 13 according to claim 6 wherein the concentration of carbon 13 in the product enriched by the laser reaction is 10 to 90%.

**10.** A process for enrichment of carbon 13 according to claim 6 wherein said feed gas mixture is continuously supplied to a reactor for the laser reaction and the reaction mixture is continuously taken out of the reactor.

FIG. 1

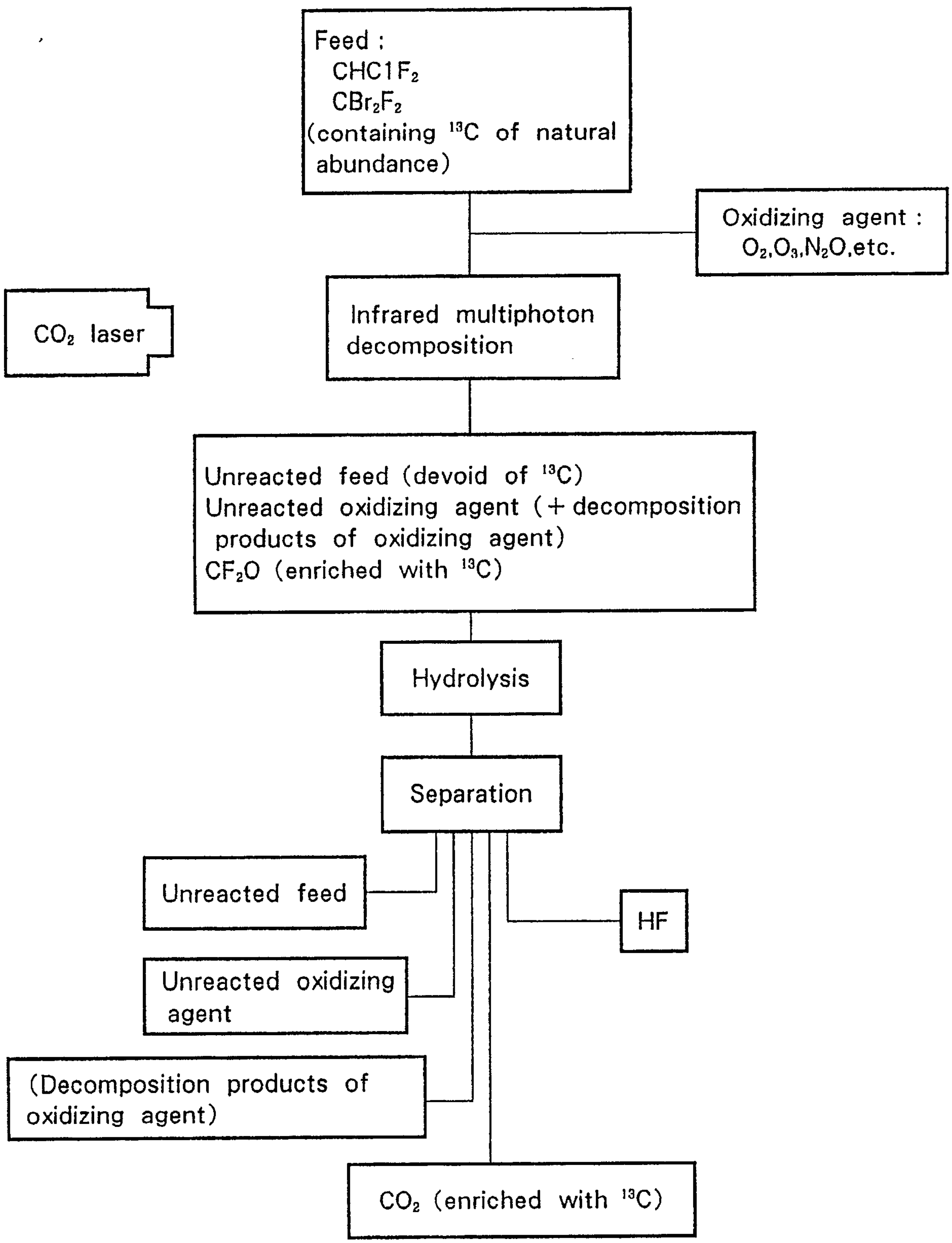
Feed :
CHC1F2
CBr2F2
(containing 13C of natural abundance)
Oxidizing agent :
O2,O3,N2O,etc.
CO2 laser
Infrared multiphoton decomposition
Unreacted feed (devoid of 13C)
Unreacted oxidizing agent (+decomposition products of oxidizing agent)
CF2O (enriched with 13C)
Hydrolysis
Separation
Unreacted feed
HF
Unreacted oxidizing agent
(Decomposition products of oxidizing agent)
CO2 (enriched with 13C)

FIG.2

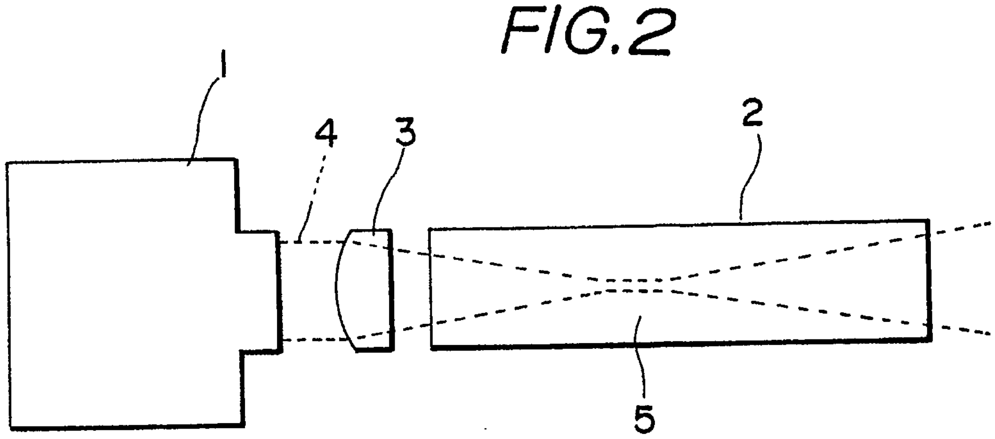


FIG.3

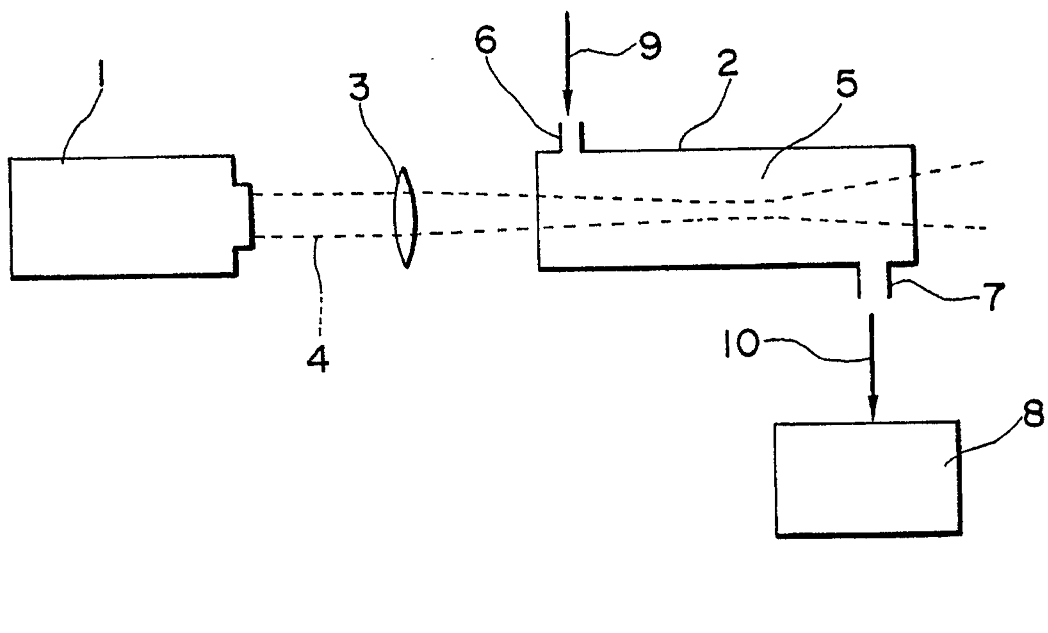

FIG.4

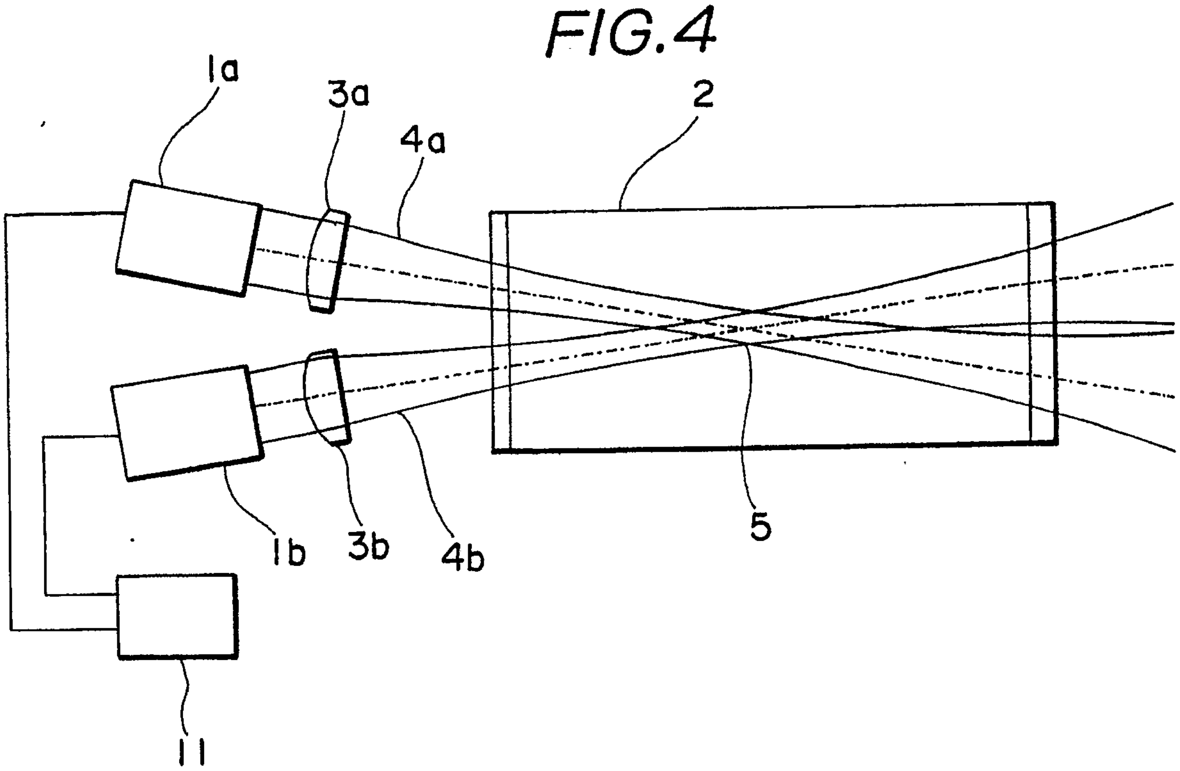


FIG.5

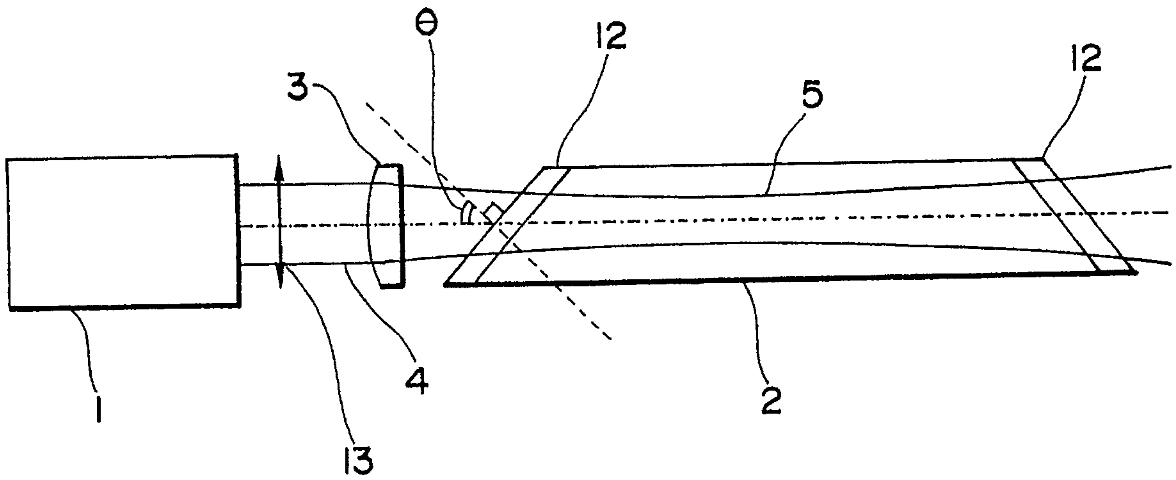

FIG.6

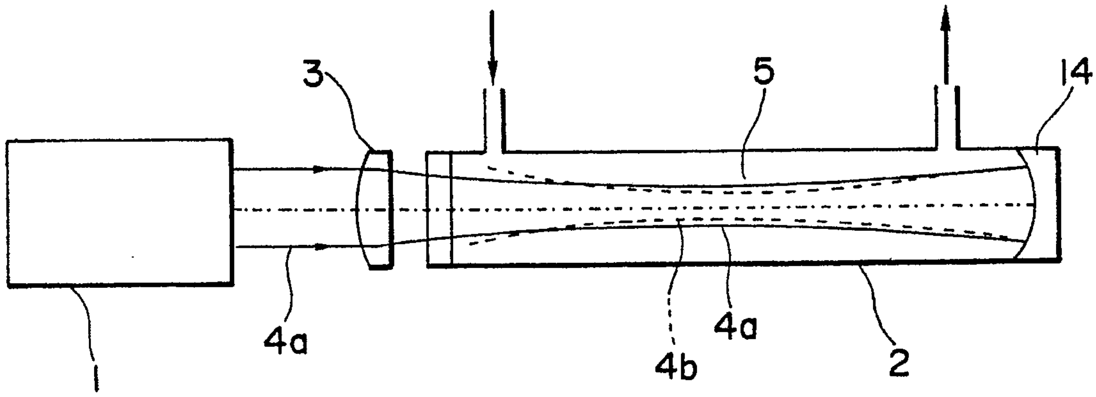


FIG.7

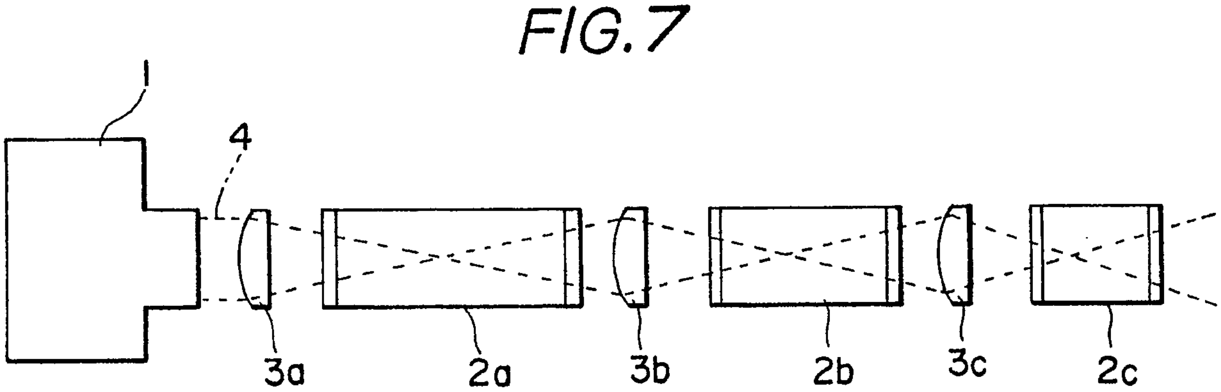


FIG.8

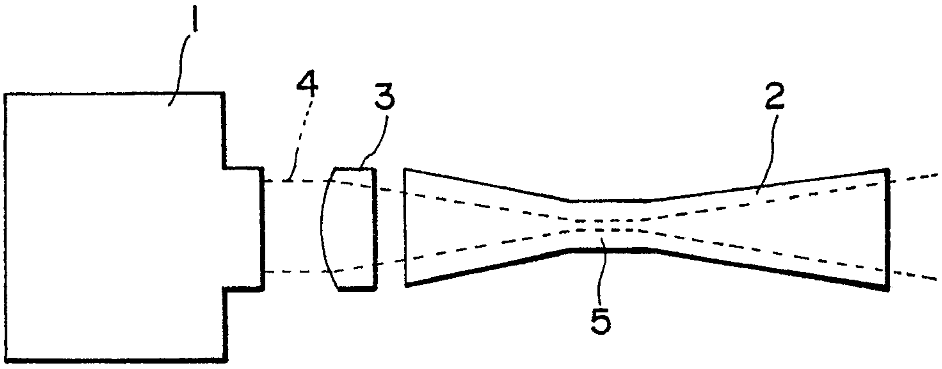

FIG.9

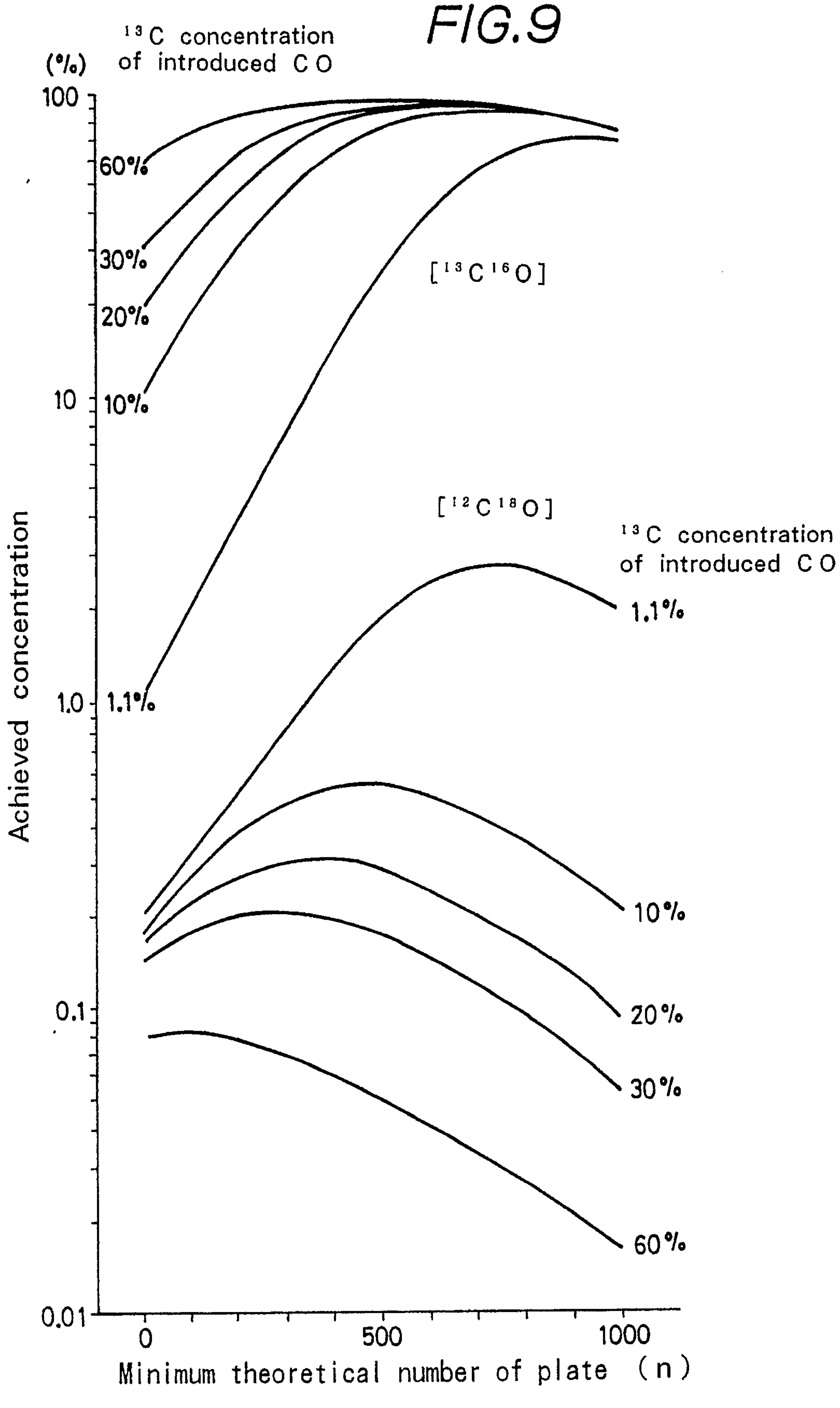

$^{13}$C concentration of introduced CO
(%)
100
60%
30%
20%
10
10%
1.0
1.1%
0.1
0.01
[$^{13}C^{16}O$]
[$^{12}C^{18}O$]
$^{13}$C concentration of introduced CO
1.1%
10%
20%
30%
60%
Achieved concentration
0
500
1000
Minimum theoretical number of plate (n)

# INTERNATIONAL SEARCH REPORT

International Application No PCT/JP90/00430

**I. CLASSIFICATION OF SUBJECT MATTER** (if several classification symbols apply, indicate all) [6]

According to International Patent Classification (IPC) or to both National Classification and IPC

Int. $Cl^5$ B01D59/34, 59/04

**II. FIELDS SEARCHED**

Minimum Documentation Searched [7]

| Classification System | Classification Symbols |
|---|---|
| IPC | B01D59/34, 59/04 |

Documentation Searched other than Minimum Documentation to the Extent that such Documents are Included in the Fields Searched [8]

| | |
|---|---|
| Jitsuyo Shinan Koho | 1926 - 1989 |
| Kokai Jitsuyo Shinan Koho | 1971 - 1989 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | US, A, 4,313,807 (M'evergnies, Fettweis), 2 February 1982 (02. 02. 82), Lines 28 to 36, column 4, lines 1 to 15, column 5 | 1, 3-5 |
| Y | US, A, 4,313,807 (M'evergnies, Fettweis), 2 February 1982 (02. 02. 82), Lines 28 to 36, column 4, lines 1 to 15, column 5 | 2, 6-10 |
| Y | 'Chemical Engineering' Vol.47, No.4 of April, 1983 (Tokyo), "Isotope Separation with Use of Laser" (Authors: Kazuo Takeuchi and Ichiro Inoue), pages 213-217, refer to particularly page 216 | 2, 6-10 |
| Y | JP, B2, 59-5335 (Kogyo Gijutsuin-cho), 3 February 1984 (03. 02. 84), Lines 2 to 18, upper left column, page 2 (Family: none) | 2, 6-10 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| June 15, 1990 (15. 06. 90) | July 2, 1990 (02. 07. 90) |
| International Searching Authority | Signature of Authorized Officer |
| Japanese Patent Office | |

International Application No. PCT/JP90/00430

**FURTHER INFORMATION CONTINUED FROM THE SECOND SHEET**

| | | |
|---|---|---|
| Y | Chemical journal 'MOL' Vol.22, No.8, August, 1984 "The Technique for Separation and Purification is now ..... Isotope Separation (2)", pages 73-81, refer to particularly pages 74 and 75 | 6 - 10 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers ...... , because they relate to subject matter not required to be searched by this Authority, namely:

2.☐ Claim numbers ......... , because they relate to parts of the international application that do not comply with the prescribed requirements to such an extent that no meaningful international search can be carried out, specifically:

3.☐ Claim numbers .... .., because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.